# EUROPEAN PATENT SPECIFICATION

(11) **EP 2 854 380 B1**
(45) Date of publication and mention of the grant of the patent: **10.07.2019**
(21) Application number: 13804926.7
(22) Date of filing: 30.05.2013
(51) Int. Cl.: H04M 1/725, G06F 3/0484, G06F 3/0488

(54) **METHOD FOR QUICKLY OPERATING FILE OF SMART PHONE AND SMART PHONE**
VERFAHREN ZUM SCHNELLEN BETRIEB EINER DATEI EINES SMARTPHONES UND SMARTPHONE
PROCÉDÉ POUR FAIRE FONCTIONNER RAPIDEMENT UN FICHIER DE SMARTPHONE, ET SMARTPHONE CORRESPONDANT

(30) Priority: 02.07.2012 CN 201210224797
(43) Date of publication of application: 01.04.2015
(73) Proprietor: ZTE Corporation, Shenzhen, Guangdong 518057 (CN)
(72) Inventor: QIAO, Bohao, Shenzhen Guangdong 518057 (CN); WANG, Kuihua, Shenzhen Guangdong 518057 (CN)
(74) Representative: Schröer, Gernot H.
(86) International application number: PCT/CN2013/076439
(87) International publication number: WO 2013/185537

(56) References cited:
- EP-A2- 2 393 000
- EP-A2- 2 442 224
- CN-A- 102 141 882
- CN-A- 102 821 193
- JP-A- 2006 311 498
- US-A1- 2008 168 403
- US-A1- 2008 309 644

## Description

### Technical Field

The present invention relates to the technical field of electronic communication terminal, and specifically, to a method for quickly operating files of a smart phone and a smart phone.

### Background of the Related Art

With the development of the technology, since electronic devices, such as a smart phone, with powerful functions and large-screen touch screens appear and have started to popularize, and various files and applications are downloaded more and more in the mobile phone, thus it is required to perform frequent operations for organizing various files stored in the mobile phone. However, there is still no system and method for conveniently and quickly processing batch files by using the touch screens of the electronic devices in the related art.

US 2008/0168403 A1 provides methods for detecting and interpreting real-world and security gestures on touch and hover sensitive devices. "Real-world" gestures such as hand or finger movements/ orientations that are generally recognized to mean certain things (e.g., an "OK" hand signal generally indicates an affirmative response) can be interpreted by a touch or hover sensitive device to more efficiently and accurately effect intended operations. These gestures can include, but are not limited to, "OK gestures," "grasp everything gestures," "stamp of approval gestures," "circle select gestures," "X to delete gestures," "knock to inquire gestures," "hitchhiker directional gestures," and "shape gestures." In addition, gestures can be used to provide identification and allow or deny access to applications, files, and the like.

EP 2442224 A2 provides a method for selecting an item in a terminal using a touchscreen or a mouse includes displaying items and selecting or diselecting items that are present on a touch movement route or a mouse drag route.

### Summary of the Invention

In order to solve the above technical problem, the example of the present invention provides a method for quickly operating files of a smart phone and a smart phone, so that a user can select the files through a slide of a finger or a touchpen and perform processing with the touch screens of the electronic devices.

The features of the method and smart phone according to the present invention are defined in the independent claims, and the preferable features according to the present invention are defined in the dependent claims.

It is disclosed a method for quickly operating files of a smart phone, which comprises:
the smart phone starting a file batch selection function according to an operation of a user;
in a state that the file batch selection function is started, the smart phone selecting files and/or folders in corresponding positions according to a sliding track of a finger or an operation rod on a touch screen; and
the smart phone performing an operation selected by the user on all selected files and/or folders.

Alternatively, the step of the smart phone selecting files and/or folders in corresponding positions according to a sliding track of a finger or an operation rod on a touch screen comprises:
detecting point coordinates of the sliding track of the finger or the operation rod on the touch screen, comparing the point coordinates and coordinates of an icon area of files and/or folders on the touch screen, and taking files and/or folders whose icon area contains at least one of the point coordinates as selected files and/or folders.

Alternatively, in the step of the smart phone selecting files and/or folders in corresponding positions according to a sliding track of a finger or an operation rod on a touch screen, the sliding track includes a sliding track generated when the finger or the operation rod slides one time or multiple times on the touch screen.

Alternatively, after the step of the smart phone selecting files and/or folders in corresponding positions according to a sliding track of a finger or an operation rod on a touch screen in a state that the file batch selection function is started, the method further comprises:
when the file batch selection function is closed according to the operation of the user, the smart phone recording the selected files and/or folders; and
when switching to another page according to the operation of the user, and re-starting the file batch selection function and selecting files and/or folders in corresponding positions according to the sliding track of the finger or the operation rod on the touch screen, the smart phone taking a union set of the files and/or folders selected this time and the files and/or folders selected and recorded previously as the currently selected files and/or folders.

Alternatively, the operation selected by the user and performed on all the selected files and/or folders is one of the following operations: "copy", "cut", "delete" and "deselect".

Alternatively, the method further comprises:
the smart phone closing the file batch selection function according to the operation of the user, and in a state that the file batch selection function is closed, processing a slide of the finger or the operation rod on the touch screen according to an ordinary slide.

It is further disclosed a smart phone, which comprises a touch screen and a file processor, wherein:
the file processor comprises: a batch selection on-off module, a file batch selection module and a file batch operation module;
the batch selection on-off module is configured to: start or close a file batch selection function according to an operation of a user;
the file batch selection module is configured to: in a state that the file batch selection function is started, select files and/or folders in corresponding positions according to a sliding track of a finger or an operation rod on a touch screen; and
the file batch operation module is configured to: perform an operation selected by the user on all selected files and/or folders.

Alternatively, the file batch selection module is configured to select files and/or folders in corresponding positions according to a sliding track of a finger or an operation rod on a touch screen in the following way:
detecting point coordinates of the sliding track of the finger or the operation rod on the touch screen, comparing the point coordinates and coordinates of an icon area of files and/or folders on the touch screen, and selecting files and/or folders whose icon area contain at least one of the point coordinates as the files and/or folders in the corresponding positions.

Alternatively, when the file batch selection module selects the files and/or folders in the corresponding positions according to the sliding track of the finger or the operation rod on the touch screen, the sliding track includes a sliding track generated when the finger or the operation rod slides one time or multiple times on the touch screen.

Alternatively, the file batch selection module is further configured to: after selecting the files and/or folders in the corresponding positions according to the sliding track of the finger or the operation rod on the touch screen in the state that the file batch selection function is started, when the file batch selection function is closed according to the operation of the user, record the selected files and/or folders; and when switching to another page according to the operation of the user, and re-starting the file batch selection function and selecting files and/or folders in corresponding positions according to the sliding track of the finger or the operation rod on the touch screen, take a union set of the files and/or folders selected this time and the files and/or folders selected and recorded previously as the currently selected files and/or folders.

In the example of the present invention, the user can perform operations on the files conveniently and quickly by using the touch screen of the smart phone, which has a significant effect in processing a large number of files.

### Brief Description of Drawings

- FIG. 1: is a schematic diagram of a smart phone according to the example of the present invention.
- FIG. 2: is a flow diagram of a method for quickly operating files of the smart phone according to the example of the present invention.
- FIG. 3: is a schematic diagram of an interface of the file processor according to the example of the present invention.

### Preferred Embodiments of the Present Invention

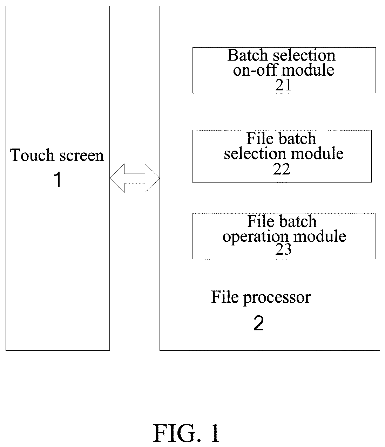

With reference to FIG. 1, the example of the present invention discloses a smart phone, which includes a touch screen 1 and a file processor 2. The file processor includes: a batch selection on-off module 21, a file batch selection module 22 and a file batch operation module 23, wherein, the batch selection on-off module 21 is configured to: start or close a file batch selection function according to an operation of a user; the file batch selection module 22 is configured to: in a state that the file batch selection function is started, select files and/or folders in corresponding positions according to a sliding track of a finger or an operation rod on a touch screen; and the file batch operation module 23 is configured to: perform an operation selected by the user on all selected files and/or folders.

The file batch selection module 22 is configured to select files and/or folders in corresponding positions according to a sliding track of a finger or an operation rod on a touch screen in the following way:
detecting point coordinates of the sliding track of the finger or the operation rod on the touch screen, comparing the point coordinates and coordinates of an icon area of files and/or folders on the touch screen, and selecting files and/or folders whose icon areas contains at least one of the point coordinates as the files and/or folders in the corresponding positions.

When the file batch selection module 22 selects the files and/or folders in the corresponding positions according to the sliding track of the finger or the operation rod on the touch screen, the sliding track includes a sliding track generated when the finger or the operation rod slides one time or multiple times on the touch screen.

The file batch selection module 22 is further configured to: after selecting the files and/or folders in the corresponding positions according to the sliding track of the finger or the operation rod on the touch screen in the state that the file batch selection function is started, when the file batch selection function is closed according to the operation of the user, record the selected files and/or folders; and when switching to another page according to the operation of the user, and re-starting the file batch selection function and selecting files and/or folders in corresponding positions according to the sliding track of the finger or the operation rod on the touch screen, take a union set of the files and/or folders selected this time and the files and/or folders selected and recorded previously as the currently selected files and/or folders.

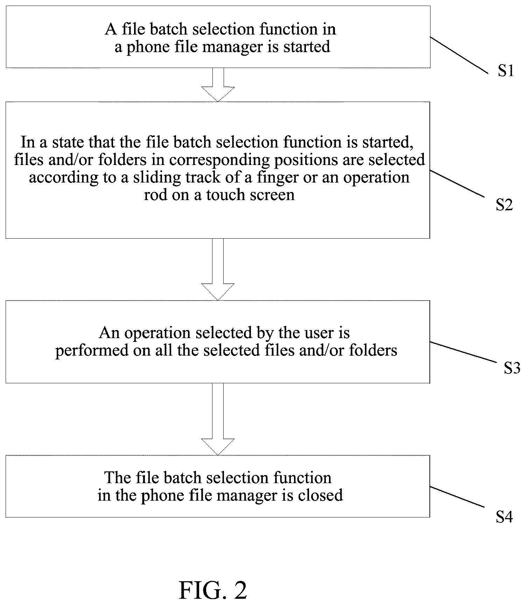

With reference to FIG. 2, the example of the present invention also discloses a method for quickly operating files of the smart phone, and the method includes the following steps.

In step S1, a file batch selection function is started according to an operation of a user.

In step S2, in a state that the file batch selection function is started, files and/or folders in corresponding positions are selected according to a sliding track of a finger or an operation rod on a touch screen.

In the step, point coordinates of the sliding track of the finger or the operation rod on the touch screen can be detected, the point coordinates are compared with coordinates of icon areas of files and/or folders on the touch screen to take files and/or folders whose icon areas contain at least one of the point coordinates as selected files and/or folders.

When selecting the files through the sliding, the user can click or slide multiple times on the touch screen. In other words, the sliding track in the step includes a sliding track generated when the finger or the operation rod slides one time or multiple times on the touch screen.

The above operation rod can be any object used for executing slide operations on the touch screen, and no limitation is made on a structural shape of the object in the technical scheme of the present invention. Moreover, in the present document, a click operation is taken as a special situation of the slide operations, that is, the slide operation whose track includes only one coordinate point.

In step S3, an operation selected by the user is performed on all the selected files and/or folders.

The operation selected by the user performed on all the selected files and/or folders can be one of the following operations: "copy", "cut", "delete" and "deselect".

In step S4, the file batch selection function is closed according to the operation of the user.

In a state that the file batch selection function is closed, a slide of the finger or the operation rod on the touch screen is processed according to an ordinary slide, that is, it is processed in accordance with the existing way.

Batch processing on files selected from multiple pages can also be implemented with the above method. After files are selected in corresponding positions according to the sliding track of the finger on the touch screen in a state that the file batch selection function is started, when the file batch selection function is closed according to the operation of the user, the selected files are recorded; and when it switches to another page according to the operation of the user, and the file batch selection function is restarted and files and/or folders in corresponding positions are selected according to the sliding track of the finger on the touch screen, a union set of the files selected this time and the files selected and recorded previously is taken as the currently selected files, and the follow-up deletion, deselection or other operations can be performed after selecting the files.

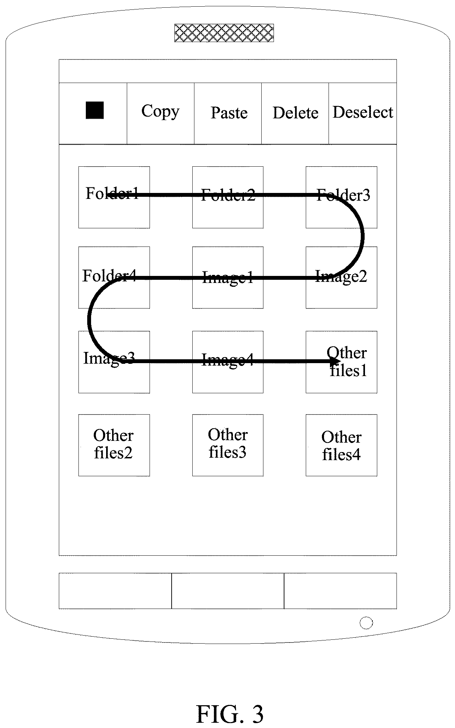

In specific operations of the user, keys corresponding to functions of the operations are marked on an interface of the file processor, with reference to FIG. 3, a file batch processing function on-off key, a copy key, a paste key, a delete key and a deselect key are marked on the interface of the file processor, there are files such as folders and images and so on in the file processor, the user slides or clicks on the positions corresponding to the files on the touch screen via the finger or the operation rod, and then it is detected whether a slide or a click of the user fall into an icon area of the files or folders, if yes, the files or folders are taken as files or folders selected by the user, the user can click the copy key at the upward side of the interface, and the files or folders selected by the user are copied, when the user wishes to deselect the selected files or folders, the deselect key at the upward side of the interface can be clicked, and the user can also perform pasting, deletion or other operations on the selected files.

### Industrial Applicability

In the example of the present invention, the user can perform operations on the files conveniently and quickly by using the touch screen of the smart phone, which has a significant effect in processing a large number of files.

## Claims

1. A method for quickly operating files of a smart phone, comprising:
the smart phone starting a file batch selection function according to an operation of a user (S1);
in a state that the file batch selection function is started, the smart phone selecting files and/or folders in corresponding positions according to a sliding track of a finger or an operation rod on a touch screen (S2); and
the smart phone performing an operation selected by the user on all selected files and/or folders (S3);
the method **characterized in that**:
the step of the smart phone selecting files and/or folders in corresponding positions according to a sliding track of a finger or an operation rod on a touch screen comprises:
detecting point coordinates of the sliding track of the finger or the operation rod on the touch screen, comparing the point coordinates and coordinates of an icon area of files and/or folders on the touch screen, and taking files and/or folders whose icon areas contain at least one of the point coordinates as selected files and/or folders;
wherein:
after the step of the smart phone selecting files and/or folders in corresponding positions according to a sliding track of a finger or an operation rod on a touch screen in a state that the file batch selection function is started, the method further comprises:
when the file batch selection function is closed according to the operation of the user, the smart phone recording the selected files and/or folders; and
when switching to another page according to the operation of the user, and re-starting the file batch selection function and selecting files and/or folders in corresponding positions according to the sliding track of the finger or the operation rod on the touch screen, the smart phone taking a union set of the files and/or folders selected this time and the files and/or folders selected and recorded previously as the currently selected files and/or folders.

2. The method according to claim 1, wherein:
in the step of the smart phone selecting files and/or folders in corresponding positions according to a sliding track of a finger or an operation rod on a touch screen, the sliding track includes a sliding track generated when the finger or the operation rod slides one time or multiple times on the touch screen.

3. The method according to claim 1 or 2, wherein:
the operation selected by the user and performed on all the selected files and/or folders is one of the following operations: "copy", "cut", "delete" and "deselect".

4. The method according to claim 1 or 2, further comprising:
the smart phone closing the file batch selection function according to the operation of the user (S4), and in a state that the file batch selection function is closed, processing a slide of the finger or the operation rod on the touch screen according to an ordinary slide.

5. A smart phone, comprising a touch screen (1) and a file processor (2), wherein:
the file processor (2) comprises: a batch selection on-off module (21), a file batch selection module (22) and a file batch operation module (23);
the batch selection on-off module (21) is configured to: start or close a file batch selection function according to an operation of a user;
the file batch selection module (22) is configured to: in a state that the file batch selection function is started, select files and/or folders in corresponding positions according to a sliding track of a finger or an operation rod on a touch screen; and
the file batch operation module (23) is configured to: perform an operation selected by the user on all selected files and/or folders;
**characterized in that**:
the file batch selection module (22) is configured to select files and/or folders in corresponding positions according to a sliding track of a finger or an operation rod on a touch screen in the following way:
detecting point coordinates of the sliding track of the finger or the operation rod on the touch screen, comparing the point coordinates and coordinates of an icon area of files and/or folders on the touch screen, and selecting files and/or folders whose icon areas contain at least one of the point coordinates as the files and/or folders in the corresponding positions;
wherein:
the file batch selection module is further configured to: after selecting the files and/or folders in the corresponding positions according to the sliding track of the finger or the operation rod on the touch screen in the state that the file batch selection function is started, when the file batch selection function is closed according to the operation of the user, record the selected files and/or folders;
and when switching to another page according to the operation of the user, and re-starting the file batch selection function and selecting files and/or folders in corresponding positions according to the sliding track of the finger or the operation rod on the touch screen, take a union set of the files and/or folders selected this time and the files and/or folders selected and recorded previously as the currently selected files and/or folders.

6. The smart phone according to claim 5, wherein:
when the file batch selection module (22) selects the files and/or folders in the corresponding positions according to the sliding track of the finger or the operation rod on the touch screen, the sliding track includes a sliding track generated when the finger or the operation rod slides one time or multiple times on the touch screen.

## Patentansprüche

1. Verfahren zur schnellen Handhabung der Dateien eines Smartphones, umfassend folgende Schritte:
Starten, durch das Smartphone, einer Funktion zum stapelmäßigen Auswählen von Dateien gemäß einer Betätigung eines Benutzers (S1);
in einem Zustand, in dem die Funktion zum stapelmäßigen Auswählen von Dateien gestartet ist, Auswählen, durch das Smartphone, von Dateien und/oder Ordnern in entsprechenden Positionen gemäß einer Gleitspur eines Fingers oder eines Betätigungsstifts an einem Berührungsbildschirm (S2); und
Ausführen, durch das Smartphone, einer Betätigung, die durch den Benutzer ausgewählt wird, an allen ausgewählten Dateien und/oder Ordnern (S3);
wobei das Verfahren **dadurch gekennzeichnet ist, dass**:
der Schritt, in dem das Smartphone Dateien und/oder Ordner in entsprechenden Positionen gemäß einer Gleitspur eines Fingers oder eines Betätigungsstifts an einem Berührungsbildschirm ausführt, Folgendes umfasst:
Detektieren von Punktkoordinaten der Gleitspur des Fingers oder des Betätigungsstifts an dem Berührungsbildschirm, Vergleichen der Punktkoordinaten und der Koordinaten eines Symbolbereichs von Dateien und/oder Ordnern an dem Berührungsbildschirm, und Übernehmen der Dateien und/oder Ordner, deren Symbolbereiche mindestens eine der Punktkoordinaten enthalten, als ausgewählte Dateien und/oder Ordner;
wobei:
nach dem Schritt, in dem das Smartphone Dateien und/oder Ordner in entsprechenden Positionen gemäß einer Gleitspur eines Fingers oder eines Betätigungsstifts an einem Berührungsbildschirm in einem Zustand, in dem die Funktion zum stapelmäßigen Auswählen von Dateien gestartet ist, auswählt, das Verfahren ferner Folgendes umfasst:
wenn die Funktion zum stapelmäßigen Auswählen von Dateien gemäß der Betätigung des Benutzers geschlossen ist, Aufzeichnen, durch das Smartphone, der ausgewählten Dateien und/oder Ordner; und
wenn gemäß der Betätigung des Benutzers auf eine andere Seite gewechselt wird und die Funktion zum stapelmäßigen Auswählen von Dateien erneut gestartet wird und Dateien und/oder Ordner in entsprechenden Positionen gemäß der Gleitspur des Fingers oder des Betätigungsstifts an dem Berührungsbildschirm ausgewählt werden, Übernehmen, durch das Smartphone, einer Vereinigungsmenge der Dateien und/oder Ordner, die dieses Mal ausgewählt werden, und der Dateien und/oder Ordner, die zuvor ausgewählt und aufgezeichnet wurden, als die derzeit ausgewählten Dateien und/oder Ordner.

2. Verfahren nach Anspruch 1, wobei:
in dem Schritt, in dem das Smartphone Dateien und/oder Ordner in entsprechenden Positionen gemäß einer Gleitspur eines Fingers oder eines Betätigungsstifts an einem Berührungsbildschirm auswählt, die Gleitspur eine Gleitspur umfasst, die entsteht, wenn der Finger oder der Betätigungsstift einmal oder mehrmals über den Berührungsbildschirm gleitet.

3. Verfahren nach Anspruch 1 oder 2, wobei:
die Betätigung, die durch den Benutzer ausgewählt wird und an allen ausgewählten Dateien und/oder Ordnern ausgeführt wird, eine der folgenden Betätigungen ist: "Kopieren", "Ausschneiden", "Löschen" und "Abwählen".

4. Verfahren nach Anspruch 1 oder 2, ferner umfassend:
Schließen, durch das Smartphone, der Funktion zum stapelmäßigen Auswählen von Dateien gemäß der Betätigung des Benutzers (S4), und in einem Zustand, in dem die Funktion zum stapelmäßigen Auswählen von Dateien geschlossen ist, Verarbeiten eines Gleitvorgangs des Fingers oder des Betätigungsstifts an dem Berührungsbildschirm gemäß einem normalen Gleitvorgang.

5. Smartphone, umfassend einen Berührungsbildschirm (1) und einen Dateiprozessor (2), wobei:
der Dateiprozessor (2) umfasst: ein Modul (21) zum Ein-/Ausschalten einer Stapelauswahl, ein Modul (22) zum stapelweisen Auswählen von Dateien und ein Modul (23) zum stapelweisen Handhaben von Dateien;
das Modul (21) zum Ein-/Ausschalten einer Stapelauswahl konfiguriert ist zum: Starten oder Schließen einer Funktion zum stapelmäßigen Auswählen von Dateien gemäß einer Betätigung eines Benutzers;
das Modul (22) zum stapelweisen Auswählen von Dateien konfiguriert ist zum: in einem Zustand, in dem die Funktion zum stapelmäßigen Auswählen von Dateien gestartet ist, Auswählen von Dateien und/oder Ordnern in entsprechenden Positionen gemäß einer Gleitspur eines Fingers oder eines Betätigungsstifts an einem Berührungsbildschirm; und
das Modul (23) zum stapelweisen Handhaben von Dateien konfiguriert ist zum: Ausführen einer Betätigung, die durch den Benutzer ausgewählt wird, an allen ausgewählten Dateien und/oder Ordnern;
**dadurch gekennzeichnet, dass**:
das Modul (22) zum stapelweisen Auswählen von Dateien konfiguriert ist, um Dateien und/oder Ordner in entsprechenden Positionen gemäß einer Gleitspur eines Fingers oder eines Betätigungsstifts an einem Berührungsbildschirm auszuwählen durch:
Detektieren der Punktkoordinaten der Gleitspur des Fingers oder des Betätigungsstifts an dem Berührungsbildschirm, Vergleichen der Punktkoordinaten und der Koordinaten eines Symbolbereichs der Dateien und/oder Ordner an dem Berührungsbildschirm, und Auswählen der Dateien und/oder Ordner, deren Symbolbereiche mindestens eine der Punktkoordinaten enthalten, als die Dateien und/oder Ordner in den entsprechenden Positionen;
wobei:
das Modul zum stapelweisen Auswählen von Dateien ferner konfiguriert ist zum: nach dem Auswählen der Dateien und/oder Ordner in den entsprechenden Positionen gemäß der Gleitspur des Fingers oder des Betätigungsstifts an dem Berührungsbildschirm in dem Zustand, in dem die Funktion zum stapelweisen Auswählen von Dateien gestartet ist, wenn die Funktion zum stapelweisen Auswählen von Dateien gemäß der Betätigung des Benutzers geschlossen wird, Aufzeichnen der ausgewählten Dateien und/oder Ordner;
und wenn gemäß der Betätigung des Benutzers auf eine andere Seite gewechselt wird und die Funktion zum stapelweisen Auswählen von Dateien neugestartet wird und Dateien und/oder Ordner in entsprechenden Positionen gemäß der Gleitspur des Fingers oder des Betätigungsstifts an dem Berührungsbildschirm ausgewählt werden, Übernehmen einer Vereinigungsmenge der Dateien und/oder Ordner, die dieses Mal ausgewählt werden, und der Dateien und/oder Ordner, die zuvor ausgewählt und aufgezeichnet wurden, als die derzeit ausgewählten Dateien und/oder Ordner.

6. Smartphone nach Anspruch 5, wobei:
wenn das Modul (22) zum stapelweisen Auswählen von Dateien die Dateien und/oder Ordner in den entsprechenden Positionen gemäß der Gleitspur des Fingers oder des Betätigungsstifts an dem Berührungsbildschirm auswählt, die Gleitspur eine Gleitspur umfasst, die entsteht, wenn der Finger oder der Betätigungsstift einmal oder mehrmals über den Berührungsbildschirm gleitet.

## Revendications

1. Procédé pour exploiter rapidement des fichiers d'un téléphone intelligent, comprenant :
le téléphone intelligent démarre une fonction de sélection de lot de fichiers selon une commande d'un utilisateur (S1);
dans un état dans lequel la fonction de sélection de lot de fichiers est démarrée, le téléphone intelligent sélectionne des fichiers et/ou dossiers dans des positions correspondantes selon un parcours de glissement d'un doigt ou d'un stylet de commande sur un écran tactile (S2); et
le téléphone intelligent réalise une opération sélectionnée par l'utilisateur sur tous les fichiers et/ou dossiers sélectionnés (S3);
le procédé étant **caractérisé par le fait que**:
l'étape de sélection, par le téléphone intelligent, de fichiers et/ou dossiers dans des positions correspondantes selon un parcours de glissement d'un doigt ou d'un stylet de commande sur un écran tactile comprend:
détecter des coordonnées de point du parcours de glissement du doigt ou du stylet de commande sur l'écran tactile, comparer les coordonnées de point et des coordonnées d'une zone d'icône de fichiers et/ou dossiers sur l'écran tactile, et prendre des fichiers et/ou dossiers dont les zones d'icône contiennent au moins l'une des coordonnées de point comme fichiers et/ou dossiers sélectionnés;
dans lequel:
après l'étape de sélection, par le téléphone intelligent, de fichiers et/ou dossiers dans des positions correspondantes selon un parcours de glissement d'un doigt ou d'un stylet de commande sur un écran tactile dans un état dans lequel la fonction de sélection de lot de fichiers est démarrée, le procédé comprend en outre:
lorsque la fonction de sélection de lot de fichiers est fermée selon la commande de l'utilisateur, le téléphone intelligent enregistre les fichiers et/ou dossiers sélectionnés; et
lors de la commutation vers une autre page selon la commande de l'utilisateur, et du redémarrage de la fonction de sélection de lot de fichiers et de la sélection de fichiers et/ou dossiers dans des positions correspondantes selon le parcours de glissement du doigt ou du stylet de commande sur l'écran tactile, le téléphone intelligent prend un ensemble d'union des fichiers et/ou dossiers sélectionnés cette fois et des fichiers et/ou dossiers sélectionnés et enregistrés précédemment comme fichiers et/ou dossiers sélectionnés actuellement.

2. Procédé selon la revendication 1, dans lequel:
dans l'étape de sélection, par le téléphone intelligent, de fichiers et/ou dossiers dans des positions correspondantes selon un parcours de glissement d'un doigt ou d'un stylet de commande sur un écran tactile, le parcours de glissement comprend un parcours de glissement généré lorsque le doigt ou le stylet de commande glisse une seule fois ou de multiples fois sur l'écran tactile.

3. Procédé selon la revendication 1 ou 2, dans lequel:
l'opération sélectionnée par l'utilisateur et réalisée sur tous les fichiers et/ou dossiers sélectionnés est l'une des opérations suivantes: « copier », « couper », « supprimer » et « annuler la sélection ».

4. Procédé selon la revendication 1 ou 2, comprenant en outre:
le téléphone intelligent ferme la fonction de sélection de lot de fichiers selon la commande de l'utilisateur (S4), et, dans un état dans lequel la fonction de sélection de lot de fichiers est fermée, traite un glissement du doigt ou du stylet de commande sur l'écran tactile selon un glissement ordinaire.

5. Téléphone intelligent, comprenant un écran tactile (1) et un processeur de fichiers (2),
le processeur de fichiers (2) comprenant: un module d'activation-désactivation de sélection de lot (21), un module de sélection de lot de fichiers (22) et un module d'exploitation de lot de fichiers (23);
le module d'activation-désactivation de sélection de lot (21) étant configuré pour: démarrer ou fermer une fonction de sélection de lot de fichiers selon une commande d'un utilisateur;
le module de sélection de Iot de fichiers (22) étant configuré pour: dans un état dans lequel la fonction de sélection de lot de fichiers est démarrée, sélectionner des fichiers et/ou dossiers dans des positions correspondantes selon un parcours de glissement d'un doigt ou d'un stylet de commande sur un écran tactile; et
le module d'exploitation de lot de fichiers (23) étant configuré pour: réaliser une opération sélectionnée par l'utilisateur sur tous les fichiers et/ou dossiers sélectionnés;
**caractérisé par le fait que**:
le module de sélection de lot de fichiers (22) est configuré pour sélectionner des fichiers et/ou dossiers dans des positions correspondantes selon un parcours de glissement d'un doigt ou d'un stylet de commande sur un écran tactile de la manière suivante:
détecter des coordonnées de point du parcours de glissement du doigt ou du stylet de commande sur l'écran tactile, comparer les coordonnées de point et des coordonnées d'une zone d'icône de fichiers et/ou dossiers sur l'écran tactile, et sélectionner des fichiers et/ou dossiers dont les zones d'icône contiennent au moins l'une des coordonnées de point comme fichiers et/ou dossiers dans les positions correspondantes;
dans lequel:
le module de sélection de lot de fichiers est en outre configuré pour: après la sélection des fichiers et/ou dossiers dans les positions correspondantes selon le parcours de glissement du doigt ou du stylet de commande sur l'écran tactile dans l'état dans lequel la fonction de sélection de lot de fichiers est démarrée, lorsque la fonction de sélection de lot de fichiers est fermée selon la commande de l'utilisateur, enregistrer les fichiers et/ou dossiers sélectionnés; et lors de la commutation vers une autre page selon la commande de l'utilisateur, et du redémarrage de la fonction de sélection de lot de fichiers et de la sélection de fichiers et/ou dossiers dans des positions correspondantes selon le parcours de glissement du doigt ou du stylet de commande sur l'écran tactile, prendre un ensemble d'union des fichiers et/ou dossiers sélectionnés cette fois et des fichiers et/ou dossiers sélectionnés et enregistrés précédemment comme fichiers et/ou dossiers sélectionnés actuellement.

6. Téléphone intelligent selon la revendication 5, dans lequel:
lorsque le module de sélection de lot de fichiers (22) sélectionne les fichiers et/ou dossiers dans les positions correspondantes selon le parcours de glissement du doigt ou du stylet de commande sur l'écran tactile, le parcours de glissement comprend un parcours de glissement généré lorsque le doigt ou le stylet de commande glisse une seule fois ou de multiples fois sur l'écran tactile.
